# EUROPEAN PATENT APPLICATION

(11) **EP 4 730 370 A1**
(43) Date of publication of application: **22.04.2026**
(21) Application number: 24909492.1
(22) Date of filing: 09.05.2024
(51) Int. Cl.: H01F 27/26, B60L 53/22, H01F 27/30, H01F 27/34, H01F 27/42, H02M 1/00, H02M 3/00, H02M 3/28, H02M 3/335, H02J 7/00

(54) **MAGNETIC INTEGRATED TRANSFORMER AND ONBOARD THREE-PORT CONVERTER**

(30) Priority: 27.12.2023 CN 202311822650
(71) Applicant: SHENZHEN VMAX NEW ENERGY (GROUP) CO., LTD, Shenzhen, Guangdong 518000 (CN)
(72) Inventor: LIU, Jun, Shenzhen, Guangdong 518000 (CN); FENG, Yingying, Shenzhen, Guangdong 518000 (CN); LI, Xusheng, Shenzhen, Guangdong 518000 (CN)
(74) Representative: Santarelli
(86) International application number: PCT/CN2024/092021
(87) International publication number: WO 2025/138525

(57) **Abstract**

The present invention discloses a magnetically integrated transformer and an on-board three-port converter. The magnetically integrated transformer includes: a first magnetic core, a second magnetic core, and a third magnetic core; a first winding and a second winding are wound around the first magnetic core, and a third winding, a fourth winding, and a fifth winding are wound around the second magnetic core, and the third magnetic core connects both sides of the magnetically integrated transformer; a magnetic flux in the first magnetic core and a magnetic flux in the second magnetic core flow opposite each other in the third magnetic core, and a magnetic flux in the third magnetic core is a sum of the magnetic flux in the first magnetic core and the magnetic flux in the second magnetic core. Compared with the prior art, in the present invention, by way of reusing magnetic cores of the transformer, it is possible to reduce the number of transformers required and noticeably decrease a volume of a magnetic component of the transformer, and by way of enabling the first magnetic core and the second magnetic core to counteract each other in the third magnetic core, it is possible to decrease a cross-sectional volume of the third core and thus shrink the transformer.

## Description

### Technical Field

The present invention relates to on-board chargers, in particular to a magnetically integrated transformer and an on-board three-port converter.

### Background of the Invention

An on-board charger and an on-board DC converter serve as important components in a new energy vehicle and perform a function of charging a high-voltage battery and a low-voltage battery in the new energy vehicle respectively, and in case of need, transmitting energy from a battery to an external load in the form of alternating current.

The on-board charger generally employs an AC/DC converter with a function of power factor correction (PFC) in cascades connection with a high-voltage DC/DC converter. In view of need for bidirectional energy flow, the AC/DC converter generally employs a totem-pole PFC converter and a three-phase voltage-source rectifier, while the high-voltage DC/DC converter generally employs a LLC converter and a dual active bridge (DAB) converter. The on-board DC converter generally employs a unidirectional DC/DC converter, mainly belonging to a class of full-bridge converters.

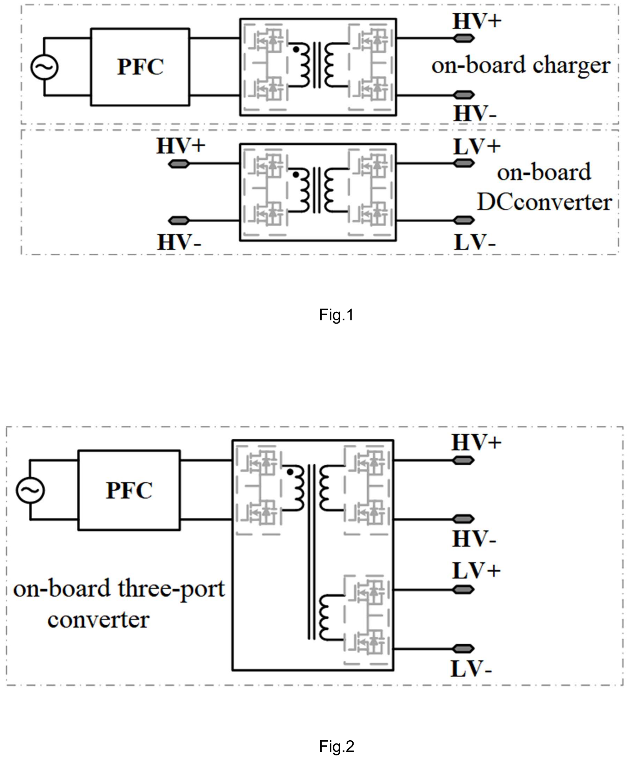

As shown in Fig. 1, a traditional on-board charger and an on-board DC converter are an unit that operates separately; therefore, they have obvious disadvantages in terms of sizes and costs. Currently, a means of integrating an on-board charger with an on-board DC/DC converter, as shown in Fig. 2, is gradually being adopted by the automotive electronics industry. Such a means of integrating noticeably reduces costs and sizes by reusing components. In the means of integrating, the traditional high-voltage DC/DC converter and the on-board DC converter are replaced with a bidirectional three-port DC/DC converter, which is responsible for transferring energy between a high-voltage battery (HV side) and a low-voltage battery (LV side).

A Chinese patent document (CN 113949282A) discloses a three-port on-board charger. In this patent, a bidirectional switch is added on a LV side to achieve power control on the LV side, and a dual-inductor is used as a current-doubling rectifier circuit. In this solution, adding the bidirectional switch undoubtedly makes an increase in complexity of drive circuits, and adding the dual inductor undoubtedly makes an increase in size of systems. Therefore, it is impossible to effectively control a power density and costs for an entire device.

A Chinese patent document (CN116191889A) discloses an isolated integrated three-port bidirectional DC-DC converter. In this patent, two transformers are used to achieve magnetic circuits decoupling for charging a high-voltage battery and a low-voltage battery, make it possible to separately control such two charging processes and improve flexibility of control. In addition, all MOS transistors operate in a zero-voltage switching (ZVS) state, so as to improving efficiency of systems to some extent. In this solution, necessity of two high-frequency transformers causes an increase in both the size and cost of systems. In order to reduce the size of systems, it is necessary to make an increase in switching frequency, but such an increase undoubtedly raises extra switching losses, in other words, a need for a compromise design. Therefore, this solution is still subject to optimization.

A Chinese patent document (CN110649813B) discloses an isolated integrated three-port bidirectional DC-DC converter. In this patent, it is possible to enable energy to transmit between any two ports only by using one integrated transformer, which presents a very high degree of flexibility for control. In this solution, a need for lots of fully controllable devices makes an increase in switching losses of converters and number of drive circuits, therefore, poses a limitation on optimization for costs and efficiencies of converters to some extent.

Therefore, how to design a magnetically integrated three-port on-board converter that can achieve higher overall efficiency while controlling sizes of transformers is a technical problem that urgently needs to be solved in the industry.

### Summary of the Invention

In view of the technical problem in the prior art that it is impossible to effectively manage a power density and costs of the entire onboard charger, the present invention proposes a a magnetically integrated transformer and an on-board three-port converter.

The present invention provides the following technical solution: a magnetically integrated transformer, comprising: a first magnetic core, a second magnetic core, and a third magnetic core;
a first winding and a second winding are wound around the first magnetic core, and a third winding, a fourth winding, and a fifth winding are wound around the second magnetic core, and the third magnetic core connects both sides of the magnetically integrated transformer;
a magnetic flux in the first magnetic core and a magnetic flux in the second magnetic core flow opposite each other in the third magnetic core, and a magnetic flux in the third magnetic core is a sum of the magnetic flux in the first magnetic core and the magnetic flux in the second magnetic core.

The present invention further provides an on-board three-port converter with the magnetically integrated transformer as above-mentioned, the on-board three-port converter includes a primary circuit connected to the first winding, a first secondary circuit connected to the second winding and the third winding, and a second secondary circuit connected to the fourth winding and the fifth winding;
the primary circuit employs a bridge circuit and has a first bridge arm and a second bridge arm;
the first secondary circuit employs a three-phase full-bridge circuit and has a third bridge arm, a fourth bridge arm, and a fifth bridge arm;
the second secondary circuit employs a power switching circuit and has at least a first power switch group and a second power switch group.

Further, a homonymous end of the first winding is connected in series with a resonant inductor and then connected to a midpoint of the first bridge arm or a midpoint of the second bridge arm;
a homonymous end of the second winding is connected to a midpoint of the third bridge arm;
a homonymous end of the third winding is connected in series to a heteronymous end of the second winding, and a DC-blocking capacitor is connected to a series connection point between the second winding and the third winding, and the other end of the DC-blocking capacitor is connected to a midpoint of the fourth bridge arm;
a homonymous end of the fourth winding is connected to a drain electrode of a power switch in the second power switch group, and a heteronymous end of the fifth winding is connected to a drain electrode of a power switch in the first power switch group;
a homonymous end of the fifth winding is connected in series to a heteronymous end of the fourth winding, and a filter inductor is connected a series connection point between the fourth winding and the fifth winding.

Further, the first bridge arm, the second bridge arm, the third bridge arm, and the fourth bridge arm operate in a DAB mode, and when the primary circuit transmits energy to the first secondary circuit, energy transmission is adjusted by means of a phase angle at which an upper-arm switch of the third bridge arm lags behind an upper-arm switch of the first bridge arm;
when the first secondary circuit transmits energy to the primary circuit, energy transmission is adjusted by means of a phase angle at which an upper-arm switch of the first bridge arm lags behind an upper-arm switch of the third bridge arm.

Further, the fourth bridge arm and the fifth bridge arm operate in a phase-shifted full-bridge mode, and when the first secondary circuit transmits energy to the second secondary circuit, energy transmission is adjusted by means of a phase angle at which a lower-arm switch of the fifth bridge arm lags behind an upper-arm switch of the fourth bridge arm.

Further, the first power switch group includes a power switching transistor S11 and a power switching transistor S13, while the second power switch group includes a power switching transistor S12 and a power switching transistor S14;
the power switching transistor S11 and the power switching transistor S12 operate in a synchronous rectification mode, and the power switching transistor S11 turns on when an upper-arm switch of the fourth bridge arm or a lower-arm switch of the fifth bridge arm turns on;
the power switching transistor S12 turns on when a lower-arm switch of the fourth bridge arm or an upper-arm switch of the fifth bridge arm turns on;
the power switching transistor S13 turns on in a manner complementary to the power switching transistor S11, and the power switching transistor S14 turns on in a manner complementary to the power switching transistor S12.

Further, the fourth bridge arm and the fifth bridge arm operate in a phase-shifted full-bridge mode, and the voltage of the third winding lags behind the voltage of the second winding, and the voltages of the fourth winding and the fifth winding lags behind the voltage of the second winding.

Further, an upper-arm switch of the first bridge arm and a lower-arm switch of the second bridge arm share an identical first driving signal;
a lower-arm switch of the first bridge arm and an upper-arm switch of the second bridge arm share an identical second driving signal;
both the first driving signal and the second driving signal have a duty cycle of 0.5, and the state of the first driving signal is complementary to that of the second driving signal.

Further, an upper-arm switch of the third bridge arm and a lower-arm switch of the fourth bridge arm share an identical third driving signal;
a lower-arm switch of the third bridge arm and an-upper arm switch of the fourth bridge arm share an identical fourth driving signal;
both the third driving signal and the fourth driving signal have a duty cycle of 0.5, and the state of the third driving signal is complementary to that of the fourth driving signal.

Further, an upper-arm switch of the fifth bridge arm has a fifth driving signal, and a lower-arm switch of the fifth bridge arm has a sixth driving signal;
both the fifth driving signal and the sixth driving signal have a duty cycle of 0.5, and the state of the fifth driving signal is complementary to that of the sixth driving signal.

Compared to the prior art, the present invention has at least the following beneficial effects.
1. In the present invention, by reusing magnetic cores of the transformer, it is possible to reduce the number of transformers required and noticeably decrease a volume of a magnetic component of the transformer.
2. During forming a transformer winding, by way of designing a direction of magnetic fluxes of the first magnetic core and the second magnetic core, it is possible to enable the two magnetic fluxes to offset each other in the third magnetic core, in other words, the peak value of the magnetic flux in the third magnetic core is smaller than that in the first magnetic core and the second magnetic core respectively. Therefore, an iron core corresponding to the third magnetic core can be selected from or designed as one with a smaller cross-sectional area, so as to decrease a volume of a magnetic component of the transformer.
3. The first bridge arm and the second bridge arm of the port A and the third bridge arm and the fourth bridge arm of the port B control power to transmit from the port A to the port B, and the fourth bridge arm and the fifth bridge arm of the port B can control power to transmit from the port B to the port C; in this way, a DC-blocking capacitor that is preferably set between the midpoint of the fourth bridge arm and the series connection point of the second transformer winding and the third transformer winding, with regard to transmission of power between any two ports of the three ports, will perform a function of isolating DC in the transformer, and can prevent the transformer from magnetic saturation.

### Brief Description of the Drawings

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
Fig. 1 is a circuit block diagram of a traditional on-board charger and an on-board DC converter.
Fig. 2 is a circuit block diagram of a solution integrating a traditional onboard charger with an on-board DC converter.
Fig. 3 is a schematic diagram of the winding of the magnetically integrated transformer in the present invention.
Fig. 4 is a circuit diagram of the magnetically integrated three-port on-board converter in the present invention.
Fig. 5 is a diagram depicting the timing and of driving signals and three magnetic fluxes of all fully controllable switches of the port B during simultaneous transmission of energy from the port A to the port B and the port C, of the magnetically integrated three-port on-board converter in the present invention.
Fig. 6 is a diagram depicting the timing and of driving signals of all fully controllable switches during simultaneous transmission of energy from the port A to the port B and the port C, of the magnetically integrated three-port on-board converter in the present invention.
Fig. 7 is a diagram depicting the timing and of driving signals of all fully controllable switches during simultaneous transmission of energy from the port B to the port A and the port C, of the magnetically integrated three-port on-board converter in the present invention.

### Detailed Description of Embodiments

In order to make the technical problem, technical solution and beneficial effect to be solved by the present invention more clearly understood, we shall further describe the present invention in detail in combination with the drawings and examples as follows. It should be understood that the specific examples described herein are only used to explain the present invention, not to pose a limitation on the present invention.

Therefore, occurrence of a technical feature in one example herein does not imply that all examples involved in the present invention must have this technical feature. Although some technical features can be combined to illustrate possible system designs, they can also be used in other combinations that are not explicitly stated. Unless otherwise specified, the combination of technical features in the examples is not intended to pose a limitation on the present invention.

We shall describe the principle and structure of the present invention in detail in combination with the drawings and examples as follows.

As shown in Fig. 1, a traditional on-board charger and an on-board DC converter are an unit that operates separately; therefore, they have obvious disadvantages in terms of sizes and costs. Currently, a means of integrating an on-board charger with an on-board DC/DC converter, as shown in Fig. 2, is gradually being adopted by a automotive electronics industry. Such a means of integrating noticeably reduces costs and sizes by reusing components. In the means of integrating, the traditional high-voltage DC/DC converter and the on-board DC converter are replaced with a bidirectional three-port DC/DC converter, which is responsible for transferring energy between a high-voltage battery (HV side) and a low-voltage battery (LV side). However, among some means of integrating, such as CN113949282A, CN116191889A, and CN110649813B, it is impossible to achieve better control to a power density and costs for an entire device.

The concept of the present invention consists in reusing magnetic cores of the transformer, so as to reduce the number of transformers required and noticeably decrease a volume of a magnetic component of the transformer, and enabling the first magnetic core and the second magnetic core to counteract each other in the third magnetic core, as to make it possible to decrease a cross-sectional volume of the third core and thus shrink the transformer.

Specifically, the magnetically integrated transformer proposed by the present invention includes a first magnetic core, a second magnetic core, and a third magnetic core;
wherein, a first winding and a second winding are wound around the first magnetic core, and a third winding, a fourth winding, and a fifth winding are wound around the second magnetic core, and the third magnetic core connects both sides of the magnetically integrated transformer;
wherein, a magnetic flux in the first magnetic core and a magnetic flux in the second magnetic core flow opposite each other in the third magnetic core, and a magnetic flux in the third magnetic core is a sum of the magnetic flux in the first magnetic core and the magnetic flux in the second magnetic core.

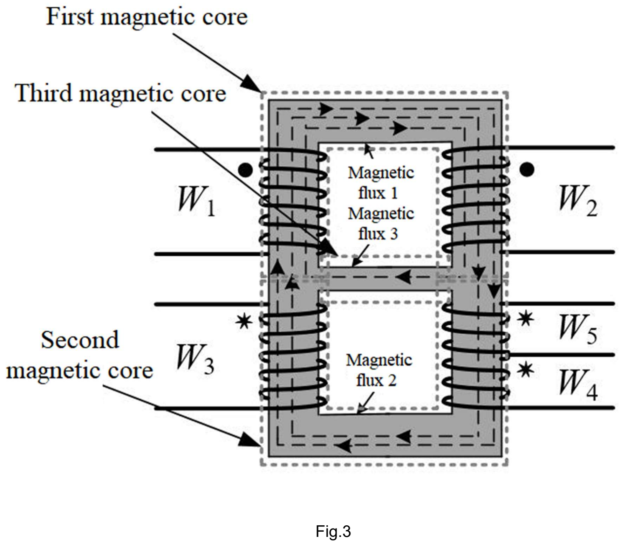

With reference to Fig. 3, a winding W1 represents the first winding, a winding W2 represents the second winding, a winding W3 represents the third winding, a winding W4 represents the fourth winding, and a winding W5 represents the fifth winding.

Flux 1 represents a flux path in the first magnetic core, Flux 2 represents a flux path in the second magnetic core, and Flux 3 represents a flux path in the third magnetic core.

First, compared to the prior art shown in Fig. 1, in the present invention, by reusing magnetic cores of two transformers, it is possible to reduce the number of transformers required and noticeably decrease a volume of a magnetic component of the transformer.

In addition, in the present invention, the magnetic flux in the first magnetic core and the magnetic flux in the second magnetic core flow opposite each other in the third magnetic core, so that the two magnetic fluxes offset each other in the third magnetic core, in other words, the peak value of the magnetic flux in the third magnetic core is smaller than that in the first magnetic core and the second magnetic core respectively. Therefore, the third magnetic core can be selected from or designed as one with a smaller cross-sectional area, so as to decrease a volume of a magnetic component of the transformer.

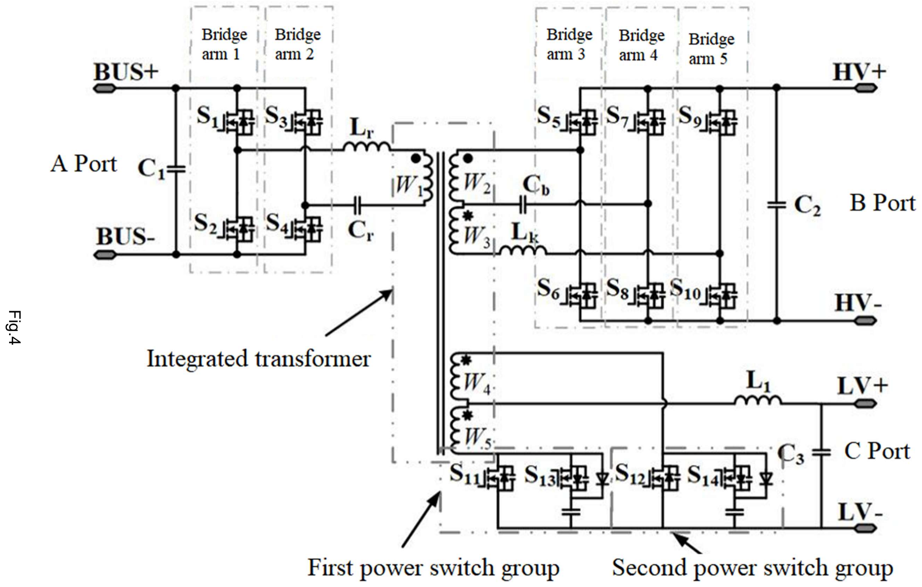

With reference to Fig. 4, the present invention proposes an on-board three-port converter with the above-mentioned magnetically integrated transformer, which includes a primary circuit connected to the first winding, a first secondary circuit connected to the second winding and the third winding, and a second secondary circuit connected to the fourth winding and the fifth winding.

The primary circuit employs a bridge circuit and has a first bridge arm and a second bridge arm.

A switch S1 and a switch S2 form the first bridge arm, and the switch S1 serves as an upper-arm switch and the switch S2 serves as a lower-arm switch.

A switch S3 and a switch S4 form the second bridge arm, and the switch S3 serves as an upper-arm switch and the switch S4 serves as a lower-arm switch.

The primary circuit is connected to a port A and configured to obtain a bus voltage (BUS) and be capable of converting DC into AC and transmitting AC to the first winding of the transformer.

The first secondary circuit employs a three-phase full-bridge circuit and has a third bridge arm, a fourth bridge arm, and a fifth bridge arm.

A switch S5 and a switch S6 form the third bridge arm, and the switch S5 serves as an upper-arm switch and the switch S6 serves as a lower-arm switch.

A switch S7 and a switch S8 form the fourth bridge arm, and the switch S7 serves as an upper-arm switch and the switch S8 serves as a lower-arm switch.

A switch S9 and a switch S10 form the fifth bridge arm, and the switch S9 serves as an upper-arm switch and the switch S10 serves as a lower-arm switch.

The first secondary circuit is connected to a port B and capable of obtaining DC generated by the transformer through the second winding and the third winding, converting it into AC and outputting a high-voltage signal from the port B.

The second secondary circuit employs a power switching circuit and has at least a first power switch group and a second power switch group.

A switch S11 and a switch S13 form the first power switch group, while a switch S12 and a switch S14 form the second power switch group.

The second secondary circuit is connected to a port C and capable of obtaining AC generated by the transformer through the fourth winding and the fifth winding, converting it into DC and outputting a low-voltage signal from the port C.

In order to enable the first magnetic core and the second magnetic core to counteract each other, the present invention provides the following arrangement.

A homonymous end of the first winding is connected in series with a resonant inductor and then connected to a midpoint of the first bridge arm (or a midpoint of the second bridge arm; both ways for a connection with the end can achieve the same effect with only a difference in specific timing in terms of control).

A homonymous end of the second winding is connected to a midpoint of the third bridge arm.

A homonymous end of the third winding is connected in series to a heteronymous end of the second winding, and a DC-blocking capacitor is connected to a series connection point between the second winding and the third winding, and the other end of the DC-blocking capacitor is connected to a midpoint of the fourth bridge arm.

A homonymous end of the fourth winding is connected to a drain electrode of a power switch in the second power switch group, and a heteronymous end of the fifth winding is connected to a drain electrode of a power switch in the first power switch group.

A homonymous end of the fifth winding is connected in series to a heteronymous end of the fourth winding, and a filter inductor is connected a series connection point between the fourth winding and the fifth winding.

In the present invention, by way of providing the above arrangement, it is possible to ensure that the magnetic flux in the first magnetic core and the magnetic flux in the second magnetic core flow opposite each other in the third magnetic core and a magnetic flux in the third magnetic core is a sum of the magnetic flux in the first magnetic core and the magnetic flux in the second magnetic core when current flows into an end with the same name as respective windings of the magnetically integrated transformer. Subsequent control to switches in combination with the above arrangement, makes it possible to enable magnetic fluxes in the third magnetic core to offset, so that a magnetic flux peak in the third magnetic core is smaller than that in the first magnetic core and the second magnetic core. Therefore, an iron core corresponding to the third magnetic core can be selected from or designed as one with a smaller cross-sectional area, so as to decrease a volume of a magnetic component of the transformer.

In addition, in this invention, a DC-blocking capacitor (a capacitor Cb as shown in Fig. 4) is connected at the series connection point between the second winding and the third winding. With regard to transmission power between any two ports of the three ports, the DC-blocking capacitor will perform a function of isolating DC in the transformer, and can prevent the transformer from magnetic saturation.

Furthermore, in the present invention, by way of controlling the fourth bridge arm and the fifth bridge arm, it is possible to make the magnetic flux in the first magnetic core and the magnetic flux in the second magnetic core flow opposite each other in the third magnetic core, so as to achieve an effect of offsetting each other, for which a specific design is provided as follows.

The fourth bridge arm and the fifth bridge arm operate in a phase-shifted full-bridge mode, and when the first secondary circuit transmits energy to the second secondary circuit, energy transmission is adjusted by means of a phase angle at which the lower-arm switch of the fifth bridge arm lags behind the upper-arm switch of the fourth bridge arm.

Based on the above design, the voltage of the third winding can lag behind the voltage of the second winding, and the voltages of the fourth winding and the fifth winding can also lag behind the voltage of the second winding; in this way, a phase difference between each voltage of the fourth winding and the fifth winding and the voltage of the second winding is 180°.

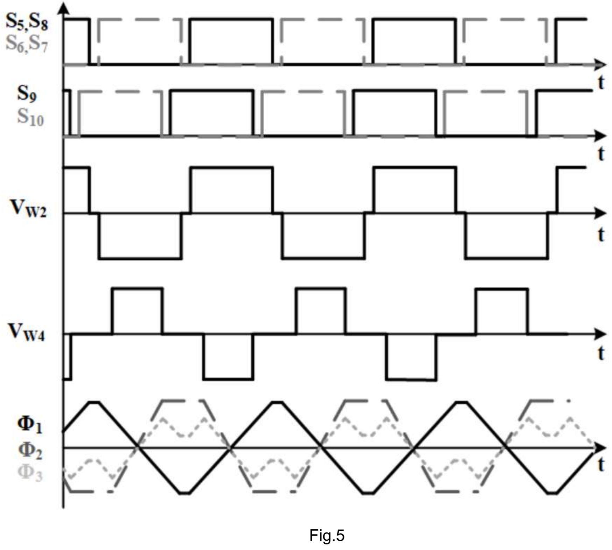

With reference to Fig. 5, in the case that the phase difference is 180°, the magnetic flux in the third magnetic core reaches a minimum; therefore, by way of controlling the phase difference between each voltage of the fourth winding and the fifth winding and the voltage of the second winding to be 180°,the present invention achieve the purpose of reducing an effective cross-sectional area of the third magnetic core.

With reference to Figs. 5-7. The overall operation principle of the present invention is as follows.
1. An upper-arm switch of the first bridge arm and a lower-arm switch of the second bridge arm share an identical first driving signal; a lower-arm switch of the first bridge arm and an upper-arm switch of the second bridge arm share an identical second driving signal; both the first driving signal and the second driving signal have a duty cycle of 0.5, and the state of the first driving signal is complementary to that of the second driving signal.

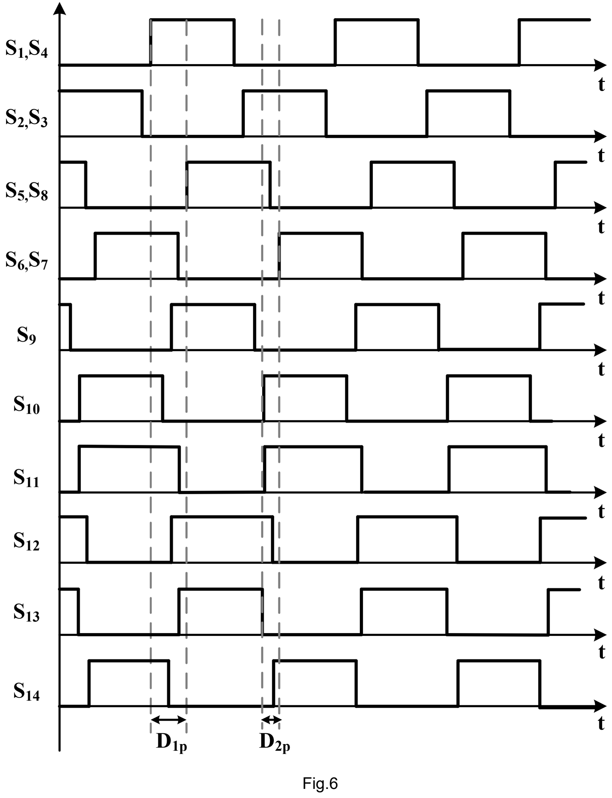

As shown in Fig. 6, the switch S1 and the switch S4 share an identical driving signal, and the switch S2 and the switch S3 share an identical driving signal. Such two driving signals have a duty cycle of 0.5, which is ascribed 180-degree conduction and complementarity. It should be noted that a dead time is supposed to be added between such two driving signals, so as to prevent an input source from a short circuit due to simultaneous conduction occurring to both the upper and lower switches of an identical bridge.

2. An upper-arm switch of the third bridge arm and a lower-arm switch of the fourth bridge arm share an identical third driving signal; a lower-arm switch of the third bridge arm and an-upper arm switch of the fourth bridge arm share an identical fourth driving signal; both the third driving signal and the fourth driving signal have a duty cycle of 0.5, and the state of the third driving signal is complementary to that of the fourth driving signal.

As shown in Fig. 6, the switch S5 and the switch S8 share an identical driving signal, and the switch S6 and the switch S7 share an identical driving signal. Such two driving signals have a duty cycle of 0.5, and are complementary to each other. It should be noted that a dead time is supposed to be added between such two driving signals, so as to prevent an output side from a short circuit due to simultaneous conduction occurring to both the upper and lower switches of an identical bridge.

3. An upper-arm switch of the fifth bridge arm has a fifth driving signal, and a lower-arm switch of the fifth bridge arm has a sixth driving signal; both the fifth driving signal and the sixth driving signal have a duty cycle of 0.5, and the state of the fifth driving signal is complementary to that of the sixth driving signal.

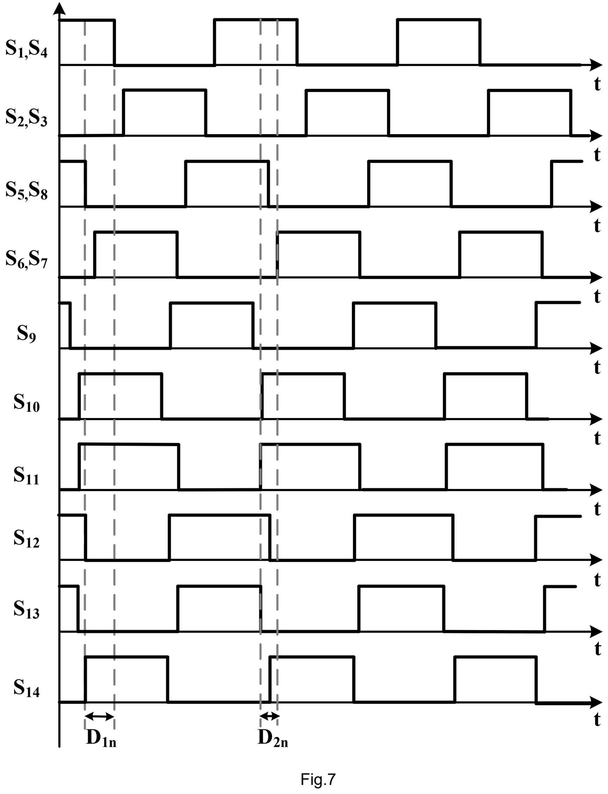

As shown in Figs 6 and 7, respective driving signals of the switch S9 and the switch S10 have a duty cycle of 0.5, which is ascribed 180-degree conduction and complementarity. It should be noted that a dead time is supposed to be added between such two driving signals, so as to prevent an output side from a short circuit due to simultaneous conduction occurring to both the upper and lower switches of an identical bridge.

4. The first bridge arm, the second bridge arm, the third bridge arm, and the fourth bridge arm operate in a DAB mode. When the primary circuit transmits energy to the first secondary circuit, energy transmission is adjusted by means of a phase angle at which the upper-arm switch of the third bridge arm lags behind the upper-arm switch of the first bridge arm.

When the first secondary circuit transmits energy to the primary circuit, energy transmission is adjusted by means of a phase angle at which the upper-arm switch of the first bridge arm lags behind the upper-arm switch of the third bridge arm.

As shown in Fig. 6, it is necessary for the driving signal of the switch S5 to lag behind that of the switch S1 by a certain phase D1p, and it is possible to adjust energy transmission from the port A to the port B only by adjusting D1p. As shown in Fig. 7, when energy is transmitted from the port B to the port A, it is necessary for the driving signal of the switch S1 to lag behind that of the switch S5 by a certain phase D1n, and it is possible to adjust energy transmission from the port B to the port A only by adjusting D1n.

5. The fourth bridge arm and the fifth bridge arm operate in a phase-shifted full-bridge mode, and when the first secondary circuit transmits energy to the second secondary circuit, energy transmission is adjusted by means of a phase angle at which the lower-arm switch of the fifth bridge arm lags behind the upper-arm switch of the fourth bridge arm.

As shown in Figs 6 and 7, when energy is transmitted from the port B to the port C, it is necessary for the driving signal of the switch S10 to lag behind that of the switch S7 by a certain phase D2p, and it is possible to adjust energy transmission from the port B to the port C only by adjusting D2p.

6. The first power switch group includes a power switching transistor S11 and a power switching transistor S13, while the second power switch group includes a power switching transistor S12 and a power switching transistor S14.

The power switching transistor S11 and the power switching transistor S12 operate in a synchronous rectification mode, and the power switching transistor S11 turns on when the upper-arm switch of the fourth bridge arm or the lower-arm switch of the fifth bridge arm turns on.

The power switching transistor S12 turns on when the lower-arm switch of the fourth bridge arm or the upper-arm switch of the fifth bridge arm turns on.

The power switching transistor S13 turns on in a manner complementary to the power switching transistor S11, and the power switching transistor S14 turns on in a manner complementary to the power switching transistor S12.

As shown in Figs. 6 and 7, the power switching transistor S11 and the power switching transistor S12 operate in a synchronous rectification mode. In this mode, the power switching transistor S11 turns on when the switch S7 or the switch S10 turn on, and the power switching transistor S12 turns on when the switch S8 or the switch S9 turn on. The power switching transistor S13 and the power switching transistor S14 turn on in a manner complementary to the power switching transistor S11 and the power switching transistor S12, respectively; in addition; the power switching transistor S13 and the power switching transistor S14 perform a function of absorbing turn-off energy and feedbacking power.

Among them, when energy is transmitted forwards from the Port A to the Port B, there are many control methods. The first bridge arm and the second bridge arm may operate in a mode of phase-shift control, frequency conversion control, or a combination of both.

In summary, the main improvement of the present invention consists in adjusting the structure and the winding of the transformer, thereby reducing the size of the transformer; in addition, devising a corresponding control method to ensure flexible and efficient control to the transformer.

Compared to the prior art, the present invention has at least the following beneficial effects.
1. In the present invention, by reusing magnetic cores of the transformer, it is possible to reduce the number of transformers required and noticeably decrease a volume of a magnetic component of the transformer.
2. During forming a transformer winding, by way of designing a direction of magnetic fluxes of the first magnetic core and the second magnetic core, it is possible to enable the two magnetic fluxes to offset each other in the third magnetic core, in other words, the peak value of the magnetic flux in the third magnetic core is smaller than that in the first magnetic core and the second magnetic core respectively. Therefore, an iron core corresponding to the third magnetic core can be selected from or designed as one with a smaller cross-sectional area, so as to decrease a volume of a magnetic component of the transformer.
3. The first bridge arm and the second bridge arm of the port A and the third bridge arm and the fourth bridge arm of the port B control power to transmit from the port A to the port B, and the fourth bridge arm and the fifth bridge arm of the port B can control power to transmit from the port B to the port C; in this way, a DC-blocking capacitor that is preferably set between the midpoint of the fourth bridge arm and the series connection point of the second transformer winding and the third transformer winding, with regard to transmission of power between any two ports of the three ports, will perform a function of isolating DC in the transformer, and can prevent the transformer from magnetic saturation.

The above description is merely a preferred embodiment of the present invention and is not supposed to pose any limitations on the present invention. Any modifications, equivalent substitutions, and improvements made within the essence and principle of the present invention should fall within the protection scope of the present invention.

## Claims

1. A magnetically integrated transformer, comprising: a first magnetic core, a second magnetic core, and a third magnetic core;
wherein, a first winding and a second winding are wound around the first magnetic core, and a third winding, a fourth winding, and a fifth winding are wound around the second magnetic core, and the third magnetic core connects both sides of the magnetically integrated transformer;
a magnetic flux in the first magnetic core and a magnetic flux in the second magnetic core flow opposite each other in the third magnetic core, and a magnetic flux in the third magnetic core is a sum of the magnetic flux in the first magnetic core and the magnetic flux in the second magnetic core.

2. An on-board three-port converter with the magnetically integrated transformer according to claim 1, wherein the on-board three-port converter includes a primary circuit connected to the first winding, a first secondary circuit connected to the second winding and the third winding, and a second secondary circuit connected to the fourth winding and the fifth winding;
the primary circuit employs a bridge circuit and has a first bridge arm and a second bridge arm;
the first secondary circuit employs a three-phase full-bridge circuit and has a third bridge arm, a fourth bridge arm, and a fifth bridge arm;
the second secondary circuit employs a power switching circuit and has at least a first power switch group and a second power switch group.

3. The on-board three-port converter according to claim 2, wherein a homonymous end of the first winding is connected in series with a resonant inductor and then connected to a midpoint of the first bridge arm or a midpoint of the second bridge arm;
a homonymous end of the second winding is connected to a midpoint of the third bridge arm;
a homonymous end of the third winding is connected in series to a heteronymous end of the second winding, and a DC-blocking capacitor is connected to a series connection point between the second winding and the third winding, and the other end of the DC-blocking capacitor is connected to a midpoint of the fourth bridge arm;
a homonymous end of the fourth winding is connected to a drain electrode of a power switch in the second power switch group, and a heteronymous end of the fifth winding is connected to a drain electrode of a power switch in the first power switch group;
a homonymous end of the fifth winding is connected in series to a heteronymous end of the fourth winding, and a filter inductor is connected a series connection point between the fourth winding and the fifth winding.

4. The on-board three-port converter according to claim 3, wherein the first bridge arm, the second bridge arm, the third bridge arm, and the fourth bridge arm operate in a DAB mode, and when the primary circuit transmits energy to the first secondary circuit, energy transmission is adjusted by means of a phase angle at which an upper-arm switch of the third bridge arm lags behind an upper-arm switch of the first bridge arm; when the first secondary circuit transmits energy to the primary circuit, energy transmission is adjusted by means of a phase angle at which an upper-arm switch of the first bridge arm lags behind an upper-arm switch of the third bridge arm.

5. The on-board three-port converter according to claim 3, wherein the fourth bridge arm and the fifth bridge arm operate in a phase-shifted full-bridge mode, and when the first secondary circuit transmits energy to the second secondary circuit, energy transmission is adjusted by means of a phase angle at which a lower-arm switch of the fifth bridge arm lags behind an upper-arm switch of the fourth bridge arm.

6. The on-board three-port converter according to claim 3, wherein the first power switch group includes a power switching transistor S11 and a power switching transistor S13, while the second power switch group includes a power switching transistor S12 and a power switching transistor S14;
the power switching transistor S11 and the power switching transistor S12 operate in a synchronous rectification mode, and the power switching transistor S11 turns on when an upper-arm switch of the fourth bridge arm or a lower-arm switch of the fifth bridge arm turns on;
the power switching transistor S12 turns on when a lower-arm switch of the fourth bridge arm or an upper-arm switch of the fifth bridge arm turns on;
the power switching transistor S13 turns on in a manner complementary to the power switching transistor S11, and the power switching transistor S14 turns on in a manner complementary to the power switching transistor S12.

7. The on-board three-port converter according to claim 5, wherein the fourth bridge arm and the fifth bridge arm operate in a phase-shifted full-bridge mode, and the voltage of the third winding lags behind the voltage of the second winding, and the voltages of the fourth winding and the fifth winding lag behind the voltage of the second winding.

8. The on-board three-port converter according to claim 2, wherein an upper-arm switch of the first bridge arm and a lower-arm switch of the second bridge arm share an identical first driving signal;
a lower-arm switch of the first bridge arm and an upper-arm switch of the second bridge arm share an identical second driving signal;
both the first driving signal and the second driving signal have a duty cycle of 0.5, and
the state of the first driving signal is complementary to that of the second driving signal.

9. The on-board three-port converter according to claim 2, wherein an upper-arm switch of the third bridge arm and a lower-arm switch of the fourth bridge arm share an identical third driving signal;
a lower-arm switch of the third bridge arm and an-upper arm switch of the fourth bridge arm share an identical fourth driving signal;
both the third driving signal and the fourth driving signal have a duty cycle of 0.5, and the state of the third driving signal is complementary to that of the fourth driving signal.

10. The on-board three-port converter according to claim 2, wherein an upper-arm switch of the fifth bridge arm has a fifth driving signal, and a lower-arm switch of the fifth bridge arm has a sixth driving signal;
both the fifth driving signal and the sixth driving signal have a duty cycle of 0.5, and the state of the fifth driving signal is complementary to that of the sixth driving signal.
